# EUROPÄISCHE PATENTANMELDUNG

(11) **EP 2 209 084 A1**
(43) Veröffentlichungstag der Anmeldung: **21.07.2010**
(21) Anmeldenummer: 09015883.3
(22) Anmeldetag: 22.12.2009
(51) Int. Cl.: G06Q 20/00, G06F 21/00

(54) **Manipulationssicherheit eines Endgeräts**

(30) Priorität: 13.01.2009 DE 102009004430
(71) Anmelder: Giesecke&Devrient, 81677 München (DE)
(72) Erfinder: Baldischweiler, Michael, 81825 München (DE); Stocker, Thomas, 81739 München (DE)

(57) **Zusammenfassung**

Bei einem auf einem portablen Datenträger (20) auszuführenden Verfahren zum Prüfen der Manipulationssicherheit eines Endgeräts (10), mit dem der Datenträger (20) als eine Transaktionseinheit (23) verbundenen ist, welche dem Endgerät (10) eine sichere Datenkommunikationsverbindung (26) zur Übertragung von Transaktionsdaten (R2) an einen Transaktionsserver (17) bereitstellen kann, meldet sich der Datenträger (20) gegenüber dem Endgerät (10) gleichzeitig als Eingabeeinheit (22) an und prüft, ob als Transaktionseinheit (23) von dem Endgerät (10) entgegengenommene Pseudotransaktionsdaten (P2) gegenüber dem Endgerät (10) als Eingabeeinheit (22) übergebenen Pseudotransaktionsdaten (P1) unmanipuliert sind.

## Beschreibung

Die vorliegende Erfindung betrifft ein Verfahren zum Prüfen einer Manipulationssicherheit eines Endgeräts durch einen portablen Datenträger sowie einen derartigen portablen Datenträger.

Es ist bekannt, auf einem prinzipiell unsicheren Endgerät, wie z. B. einem Personal- oder sonstigem Computer mit Internetzugang mittels eines an das Endgerät anschließbaren portablen Datenträgers eine gesicherte Datenkommunikationsverbindung zu einem externen Transaktionsserver, z.B. einem Online-Banking-Server einer Bank oder dergleichen, für eine gesicherte Transaktionsabwicklung bereitzustellen. Dies wird beispielsweise durch ein so genannte "Internet Smart Card" verwirklicht, die über eine USB-Schnittstelle an das Endgerät anschließbar ist und den gesamten Datenverkehr zu und von dem Transaktionsserver verschlüsselt, also insbesondere auch sicherheitskritische Authentisierungs- oder Konto- bzw. Bankdaten. Ein solcher als Internet Smart Card ausgestalteter portabler Datenträger umfasst auch einen eigenen Webserver, auf dessen Webseiten der Benutzer mit einem Webbrowser des Endgeräts genauso über die Internet Smart Card zugreifen kann, wie auf Webseiten eines Transaktionsservers im Internet.

Bei einer Transaktion gibt der Benutzer über eine an dem Endgerät angeschlossene Tastatur oder ein sonstiges Eingabegerät Transaktionsdaten in eine formularartige, von dem Transaktionsserver bereitgestellte Webseite ein, die mittels des Browsers des Endgeräts auf dessen Monitor oder Bildschirm angezeigt wird.

Während diese Technologie eine sichere Datenkommunikationsverbindung zwischen dem Datenträger und dem Transaktionsserver gewährleistet, bildet das weiterhin ungesicherte Endgerät einen Angriffspunkt für Datenmanipulationen, beispielsweise durch eine auf dem Endgerät installierte Schadsoftware, wie z.B. einen Virus oder einen Trojaner. Eine solche Schadsoftware könnte insbesondere die von dem Benutzer über die Tastatur eingegebenen Transaktionsdaten manipulieren, bevor diese über den Browser an den gesicherten Datenträger übergeben werden. Beispielsweise können auf diese Weise Transaktionsdaten derart manipuliert werden, dass z.B. eine Online-Banküberweisung unbemerkt zugunsten eines Kontos eines unberechtigten Dritten ausgeführt wird, was weder für den portablen Datenträger noch für den Transaktionsserver als solches zu erkennen ist.

In diesem Zusammenhang offenbart die WO 2006/089710 ein personalisiertes Sicherheitsmodul, das zwischen ein Endgerät und dessen Tastatur geschaltet werden kann und in einem bestimmten Betriebsmodus über die Tastatur eingegebene Transaktionsdaten prüft, bevor sie zur Durchführung der Transaktion an das Endgerät weitergeleitet werden. Sicherheitsrelevante Transaktionsdaten werden von dem Modul vor der Weiterleitung einer Verifikation unterzogen, die beispielsweise die Authentisierung des Benutzers umfassen kann. Bei einer erfolgreichen Verifikation, z. B. über eine PIN- oder TAN-Eingabe des Benutzers, werden die Transaktionsdaten schließlich gesichert, z.B. kryptographisch signiert, an das Endgerät weitergegeben. Ein Ausspähen und/oder Manipulieren von Transaktionsdaten durch eine auf dem Endgerät installierte Schadsoftware ist hierbei jedoch nicht auszuschließen.

Es ist auch nicht möglich, eine Schadsoftware auf dem Endgerät mit einer Antivirus-Software zuverlässig aufzuspüren, da nicht sichergestellt werden kann, dass die Antivirus-Software alle Viren/Trojaner bzw. deren Signaturen kennt. Insbesondere können auch spezifische, individuell entwickelte und einzeln eingesetzte Trojaner/Viren nicht erkannt werden, da deren Signaturen einer Antivirus-Software gar nicht bekannt sein können.

Demzufolge ist es die Aufgabe der vorliegenden Erfindung, ein Verfahren anzugeben, mit dem das Vorliegen einer Schadsoftware auf einem Endgerät zuverlässig geprüft werden kann.

Diese Aufgabe wird erfindungsgemäß durch ein Verfahren sowie einen portablen Datenträger mit den Merkmalen der unabhängigen Ansprüche gelöst. Die davon abhängigen Ansprüche beschreiben vorteilhafte Ausgestaltungen und Weiterbildungen der Erfindung.

Bei einem erfindungsgemäßen, auf einem portablen Datenträger ausführbaren Verfahren zum Prüfen einer Manipulationssicherheit eines Endgeräts, mit dem der Datenträger über eine geeignete Datenkommunikationsschnittstelle verbunden ist, ist der Datenträger als Transaktionseinheit gegenüber dem Endgerät angemeldet. Er stellt dem Endgerät vorzugsweise eine sichere Datenkommunikationsverbindung zu einem externen Transaktionsserver zur Übertragung von Transaktionsdaten an den Transaktionsserver zur Verfügung. Ein derartiger portabler Datenträger kann insbesondere die Funktionalität einer "Internet Smart Card" besitzen, und insofern als Transaktionseinheit eine Datenkommunikation des Endgeräts mit einem externe Transaktionsserver absichern.

Zum Prüfen der Manipulationssicherheit des Endgeräts meldet sich der Datenträger gegenüber dem Endgerät auch als Eingabeeinheit an, um auf diese Weise kontrolliert Eingabedaten im Rahmen der Manipulationssicherheitsprüfung simulieren zu können. Der derart als Transaktionseinheit und als Eingabeeinheit gegenüber dem Endgerät angemeldete Datenträger prüft dann, ob Pseudotransaktionsdaten, die der Datenträger in seiner Funktion als Eingabeeinheit des Endgeräts an das Endgerät übergibt, von dem Endgerät unmanipuliert an den Datenträger in seiner Funktion als Transaktionseinheit zurückgegeben werden. Durch einen Vergleich der dem Endgerät übergebenen Pseudotransaktionsdaten mit denjenigen Transaktionsdaten, die der Datenträger von dem Endgerät entgegengenommenen hat, wird festgestellt, ob auf dem Endgerät eine Schadsoftware installiert ist, die Transaktionsdaten manipuliert, was sich dann in einer Abweichung der übergebenen von den wieder entgegengenommenen Pseudotransaktionsdaten äußert. Falls die wieder entgegengenommenen Pseudotransaktionsdaten jedoch unmanipuliert sind, d.h. die übergebenen und wieder entgegengenommenen Pseudotransaktionsdaten stimmen im Wesentlichen überein, ist sichergestellt, dass auf dem Endgerät keine Schadsoftware existiert, die Transaktionsdaten auf ihrem Weg von einer Eingabeeinheit des Endgeräts zum Datenträger in seiner Funktion als Transaktionseinheit und weiter zu dem externen Transaktionsserver manipuliert.

In diesem Zusammenhang ist mit "unmanipulierten" bzw. "im Wesentlichen übereinstimmen Pseudotransaktionsdaten" gemeint, dass sich die übergebenen und die wieder entgegengenommenen Pseudotransaktionsdaten lediglich aufgrund von üblichen oder standardisierten Datenumsetzungen oder - transformationen unterscheiden - beispielsweise durch Protokollumsetzungen, angepasste oder aktualisierte Kopf- oder Verwaltungsdaten oder dergleichen - und die Nutzdaten, die die eigentliche Transaktion durch Konto-, Bank-, Überweisungsbetrags-, Authentifizierungs- und sonstige materielle Daten definieren, unverändert geblieben sind und übereinstimmen.

Hierbei können die von dem Datenträger als Eingabeeinheit an das Endgerät übergebenen Pseudotransaktionsdaten sowohl reale Transaktionsdaten sein, die von dem Transaktionsserver tatsächlich als Realtransaktion umgesetzt werden können, als auch simulierte Transaktionsdaten, die keine Realtransaktion definieren und von dem Transaktionsserver nicht umgesetzt werden können. Die wieder entgegengenommenen Pseudotransaktionsdaten werden nach dem Vergleich vorzugsweise nicht an den Transaktionsserver weitergeleitet, da sie keine von dem Benutzer des Endgeräts bestimmte und veranlasste Realtransaktion definieren, sondern nur zu Prüfzwecken erzeugt und an das Endgerät übergeben wurden.

Anders als bei einer auf dem Endgerät installierten Antivirus-Software ist es für den Erfolg des erfindungsgemäßen Prüfverfahrens unerheblich, ob eine auf dem Endgerät vorhandene Schadsoftware bzw. deren Signatur bereits bekannt ist oder ob eine noch unbekannte oder sogar speziell zur Manipulation oder zum Ausspähen des betreffenden Endgeräts entwickelte Schadsoftware vorliegt, da durch den Vergleich von übergebenen und wieder entgegengenommenen Pseudotransaktionsdaten jedwede Datenmanipulation erkannt werden kann.

Da das Verfahren auf dem portablen Datenträger durchgeführt bzw. von diesem gesteuert wird, ist es ferner möglich, den Datenträger auch an völlig unbekannten Endgeräten als Eingabe-/Transaktionseinheit einzusetzen, z. B. an einem Computer in einem Internetcafe, da auch die Manipulationssicherheit von solchen höchst unsicheren öffentlichen Endgeräten überprüft werden kann.

Entsprechend umfasst ein erfindungsgemäßer portabler Datenträger zumindest einen Speicher und einen Prozessor sowie eine Datenkommunikationsschnittstelle zum Verbinden des Datenträgers mit dem Endgerät. Eine Steuereinrichtung des Datenträgers, die beispielsweise eine durch den Prozessor ausführbare Anwendungs- oder Betriebssystemapplikation sein kann, ist derart ausgebildet, dass sie sich gegenüber dem Endgerät gleichzeitig als sichere Transaktionseinheit, die eine abgesicherte Datenkommunikationsverbindung zu einem externen Transaktionsserver bereitstellt, und als Eingabeeinheit anmelden kann, die eine beliebige an das Endgerät anschließbare Eingabeeinrichtung simuliert, beispielsweise eine Tastatur, eine Maus, einen biometrischen Sensor oder dergleichen. Die Steuereinrichtung prüft die Manipulationssicherheit des Endgerätes dann dadurch, dass sie als Eingabeeinheit Pseudotransaktionsdaten an das Endgerät übergibt und diese als Transaktionseinheit von dem Endgerät wieder entgegennimmt und die Manipulationssicherheit des Endgerätes feststellt, wenn die übergebenen und die wieder entgegengenommenen Pseudotransaktionsdaten im Wesentlichen übereinstimmen.

Vorzugsweise ist der erfindungsgemäße portable Datenträger von Typ der Eingangs erwähnten "Internet Smart Card" und ist zusätzlich mit einer Steuereinrichtung ausgestattet, die die Funktionalitäten zur Realisierung der erfindungsgemäßen Manipulationssicherheitsprüfung bereitstellt. Dabei umfasst der erfindungsgemäße portable Datenträger vorzugsweise nur eine physikalische Schnittstelle, z.B. eine USB-Schnittstelle oder dergleichen, über die sowohl die Verbindung zu dem Endgerät als auch die sichere Datenkommunikationsverbindung zu dem externen Transaktionsserver über das Endgerät hergestellt wird.

Die Übergabe von Pseudotransaktionsdaten von dem Datenträger als Eingabeeinheit an das Endgerät kann beispielsweise dadurch erfolgen, dass der Datenträger die Pseudotransaktionsdaten in Eingabefelder einer formularartigen Webseite (Web-Formular) eingibt, z.B. in eine Authentisierungs- oder sonstige Zugangsseite zu einer Online-Banking-Anwendung auf dem Transaktionsserver, die von dem Transaktionsserver (oder dem Datenträger) bereitgestellt und von einem Browser des Endgeräts angezeigt wird. Die in das Web-Formular eingegebenen Pseudotransaktionsdaten werden dann von dem Datenträger als Transaktionseinheit wieder entgegengenommen, wenn das Endgerät das ausgefüllte Web-Formular an den Datenträger zur Übertragung an den Transaktionsserver übergibt. Dieses Vorgehen ist sowohl vor und nach einer von dem Benutzer veranlassten Realtransaktion als auch gleichzeitig mit einer solchen möglich, d.h. während der Benutzer Realtransaktionsdaten in das Web-Formular eingibt.

Vorzugsweise werden die Pseudotransaktionsdaten von dem Datenträger als Eingabeeinheit derart erzeugt, dass sie sich von realen Transaktionsdaten unterscheiden, die eine von einem Benutzer des Endgeräts beabsichtigte und veranlasste Realtransaktion definieren und von dem Transaktionsserver ausführbar sind. Die Pseudotransaktionsdaten werden vorzugsweise derart erzeugt, dass sie Realtransaktionsdaten lediglich nachbilden oder simulieren, nicht aber als solche verwendet werden können. Da sich der Datenträger gegenüber dem Endgerät vorzugsweise als Tastatureingabeeinheit anmeldet, können die erzeugten Pseudotransaktionsdaten nachgeahmte oder simulierte PIN-, TAN- oder sonstige numerische Authentisierungsdaten, Konto- oder Bankdaten, Daten, die Überweisungsbeträge betreffen, oder sonstige personenbezogene oder sicherheitskritische Daten einer Transaktion sein. Der Datenträger meldet sich gegenüber dem Endgerät bevorzugt als Tastatureinheit an, wobei die übergebenen Pseudotransaktionsdaten vorzugsweise PIN-Daten, TAN-Daten und/oder Konto- und Bankdaten umfassen.

Der tragbare Datenträger kann reale Transaktionsdaten vor der Übertragung zum Transaktionsserver durch Verschlüsseln und/oder Signieren absichern. Pseudotransaktionsdaten werden vom Datenträger nicht derart abgesichert und vorzugsweise auch nicht an den Transaktionsserver übermittelt.

Gegenstand einer Manipulation von Transaktionsdaten durch eine auf dem Endgerät installierte Schadsoftware können nicht nur die Transaktionsdaten selbst sein, sondern auch deren Übertragungsweg zu dem Transaktionsserver. So können die Transaktionsdaten zusätzlich oder alternativ über eine andere als die von dem Datenträger als Transaktionseinheit bereitgestellte sichere Datenkommunikationsverbindung an den betreffenden Transaktionsserver übertragen werden. Beispielsweise kann eine Schadsoftware Transaktionsdaten, die von einer Eingabeeinheit an das Endgerät übergeben werden, direkt an einen externe Transaktionsserver senden, z.B. über eine ungesicherte Internetverbindung des Endgeräts unter Umgehung des Datenträgers, was weitere Manipulationsmöglichkeiten durch Dritte außerhalb des Endgeräts zur Folge hat, z.B. an einer Online-Banking-Schnittstelle des Transaktionsservers.

Aus diesem Grund werden die Pseudotransaktionsdaten vorzugsweise derart erzeugt, dass für den Transaktionsserver aufgrund einer Manipulation empfangene Pseudotransaktionsdaten als solches erkennbar sind und nicht ausgeführt werden. Die Pseudotransaktionsdaten können derart erzeugt werden, dass der betreffende Transaktionsserver erkennt, ob die empfangenen (Pseudo-) Transaktionsdaten eine von einem Benutzer bestimmte und beabsichtigte Realtransaktion repräsentieren, oder ob sie Pseudotransaktionsdaten repräsentieren, die unter Umgehung des Datenträgers direkt an den Transaktionsserver übertragen wurden.

Dies kann beispielsweise dadurch erreicht werden, dass die von dem Datenträger als Eingabeeinheit erzeugten Pseudotransaktionsdaten zusätzliche Verwaltungs- oder Steuerdaten umfassen, die nicht die schützenswerten personenbezogenen oder sicherheitskritischen eigentlichen Transaktionsdaten (Nutzdaten) betreffen, sondern lediglich Zusatzinformation für den Transaktionsserver, z.B. eine Signatur oder dergleichen. Derartige Verwaltungs- oder Steuerdaten würden von einer auf dem Endgerät installierten Schadsoftware nicht manipuliert, da die Manipulation einer Schadsoftware in der Regel darauf gerichtet ist, die schützenswerten eigentlichen Transaktionsdaten derart zu verändern, dass eine gefälschte Transaktion ausgeführt wird.

Um auszuschließen, dass Pseudotransaktionsdaten von dem Transaktionsserver ausgeführt werden, die von einer Schadsoftware derart manipuliert wurden, dass sie eine von dem Benutzer nicht veranlasste, gefälschte Realtransaktion definieren und unter Umgehung des Datenträgers als Transaktionseinheit direkt an den Transaktionsserver übertragen wurden, erzeugt der Datenträger die Pseudotransaktionsdaten vorzugsweise derart, dass der Transaktionsserver anhand der empfangenen (Pseudo-) Transaktionsdaten erkennen kann, dass diese, obwohl sie eine (gefälschte) ausführbare Realtransaktion definieren, von einer Schadsoftware manipuliert wurden. Dies kann erreicht werden, indem die Steuereinrichtung des Datenträgers von dem Endgerät entgegengenommene Realtransaktionsdaten, die eine von dem Benutzer beabsichtigte Realtransaktion definieren, vor dem Weiterleiten an den Transaktionsserver mit einer Markierung, einem Flag oder dergleichen versieht, anhand dessen für den Transaktionsserver erkennbar ist, dass von ihm empfangene Transaktionsdaten tatsächlich von dem Datenträger über die bereitgestellte sichere Datenkommunikationsverbindung weitergeleitet wurden und insofern geprüfte und von dem Benutzer bestimmte und veranlasste reale Transaktionsdaten repräsentieren, die als solche ausgeführt werden können.

Zusätzlich ist es möglich, dass die Pseudotransaktionsdaten von dem Datenträger als Eingabeeinheit derart erzeugt werden, dass die Steuereinheit des Datenträgers anhand von wieder entgegengenommenen Pseudotransaktionsdaten, die den übergebenen Pseudotransaktionsdaten nicht entsprechen, nicht nur das prinzipielle Vorliegen einer Schadsoftware auf dem Endgerät feststellen sondern auch die betreffende Schadsoftware identifizieren kann.

Der Datenträger kann die Pseudotransaktionen kontinuierlich und/oder zu jeweils zufällig bestimmten Zeitpunkten durchführen. Ebenso kann der Datenträger die Pseudotransaktion unmittelbar vor einer Übertragung von solchen Transaktionsdaten über die sichere Datenkommunikationsverbindung an den Transaktionsserver durchführen, die eine von einem Benutzer des Datenträgers veranlasste Transaktion definieren. Weiterhin kann der Datenträger mehrere Pseudotransaktionen hintereinander durchführen und zu einem beliebigen Zeitpunkt während des Durchführens der mehreren Pseudotransaktionen solche Transaktionsdaten an den Transaktionsserver übertragen, die eine von einem Benutzer des Datenträgers veranlasste und von dem Transaktionsserver ausführbare Transaktion definieren. Auch kann der Datenträger als Transaktionseinheit entgegengenommene Transaktionsdaten, die eine von einem Benutzer des Datenträgers veranlasste und von dem Transaktionsserver ausführbare Transaktion definieren, zwischenspeichern und erst dann an den Transaktionsserver übertragen, wenn die Manipulationssicherheit des Endgeräts mittels einer oder mehreren Pseudotransaktionen feststellt wird.

Vorzugsweise führt der Datenträger die oben beschriebene Manipulationssicherheitsprüfung kontinuierlich aus, z.B. zu regelmäßigen oder zufällig bestimmten Zeitpunkten, um eine zeitlich möglichst engmaschige Prüfung des Endgeräts sicherzustellen und dadurch reale Transaktionsdaten umfassend schützen zu können, die eine von dem Benutzer des Datenträgers zwischen oder während dieser Vielzahl von Manipulationssicherheitsprüfungen veranlasste Realtransaktion definieren. Vorzugsweise wird die Manipulationssicherheitsprüfung zu beliebigen, zufällig bestimmten Zeitpunkten durchgeführt, so dass es für eine Schadsoftware nicht möglich ist, z.B. aufgrund von Heuristiken, zwischen Pseudotransaktionsdaten für eine Manipulationssicherheitsprüfung und realen Transaktionsdaten für eine von dem Benutzer veranlassten Realtransaktion zuverlässig zu unterscheiden.

Insofern ist es möglich, unmittelbar vor einer von einem Benutzer veranlassten und von dem Transaktionsserver ausführbaren Realtransaktion eine Manipulationssicherheitsprüfung mit Pseudotransaktionsdaten durchzuführen, um die Manipulationssicherheit des Endgeräts für eine nachfolgende Realtransaktion zu schützen. Die Realtransaktion wird hierbei erst dann ausgeführt, d.h. die entsprechenden realen Transaktionsdaten werden von dem Datenträger als Transaktionseinheit erst dann über die sichere Datenkommunikationsverbindung an den Transaktionsserver übertragen, wenn die zuvor durchgeführte Manipulationssicherheitsprüfung erfolgreich abgeschlossen ist.

Der Datenträger kann also mehrere Pseudotransaktionen sequentiell oder teilweise überlappend durchführen und zu einem beliebigen Zeitpunkt während der Abwicklung dieser Pseudotransaktionen eine von dem Benutzer veranlasste Realtransaktion bearbeiten. Die Realtransaktion wird also durch die Vielzahl von Pseudotransaktionen maskiert, so dass eine Identifikation von Pseudotransaktionen und Realtransaktionen durch eine Schadsoftware wesentlich erschwert wird.

Eine reale Transaktion kann durch Pseudotransaktionen umschlossen werden. Insbesondere kann eine erste Pseudotransaktion vorher und eine zweite nachher, d.h. nach der realen Transaktion, erfolgen.

Als Auslöser für den Start einer Pseudotransaktion kann die Anforderung des Eingabeformulars (von dem Webserver des tragbaren Datenträgers) für die realen Transaktionsdaten dienen. Der Datenträger kann eine Liste von vordefinierten Transaktionsdatensätzen speichern und dem Benutzer als Transaktionseinheit die Auswahl eines der vordefinierten Transaktionsdatensätze ermöglichen.

Vorzugsweise werden reale Transaktionsdaten, die der Datenträger in seiner Funktion als Transaktionseinheit von dem Endgerät zur Übertragung an den Transaktionsserver entgegennimmt, zunächst zwischengespeichert, um sie erst dann an die Transaktionsserver zur Abwicklung der betreffenden Transaktion zu übertragen, wenn die Manipulationssicherheit des Endgeräts mittels einer oder mehrerer Pseudotransaktionen verifiziert wurde. Sofern nach dem Zwischenspeichern von realen Transaktionsdaten noch festgestellt wird, dass auf dem Endgerät eine Schadsoftware installiert ist, wird die Realtransaktion durch die Steuereinrichtung abgebrochen und die zwischengespeicherten Transaktionsdaten werden gelöscht. Hierbei kann vorgesehen sein, dass die zwischengespeicherten Realtransaktionsdaten an den Transaktionsserver zur Ausführung weitergeleitet werden, wenn ein vorgegebenes Zeitintervall verstrichen ist, ohne dass die Steuereinrichtung als Transaktionseinheit manipulierte Pseudotransaktionsdaten entgegengenommen hat.

Ebenso ist es möglich, dass eine von einem Benutzer des Datenträgers veranlasste Realtransaktion, deren reale Transaktionsdaten bereits an den Transaktionsserver übertragen wurden, noch nachträglich abgebrochen wird, wenn die Steuereinrichtung des Datenträgers mittels einer oder mehrerer Pseudotransaktionen nachträglich feststellt, dass das Endgerät nicht manipulationssicher ist und die übertragenen Transaktionsdaten deshalb manipuliert sein könnten. Zum Abbrechen einer solchen Transaktion, deren (manipulierte) Transaktionsdaten bereits an den Transaktionsserver übertragen wurden, kann beispielsweise eine Wartezeit für den Transaktionsserver vereinbart werden, innerhalb der der Datenträger die betreffende Transaktion mittels eines Abbruchsignals an den Transaktionsserver noch stoppen kann.

Vorzugsweise treten die oben geschilderten Konsequenzen einer auf dem Endgerät installierten Schadsoftware - also das Verhindern von zukünftigen Transaktionen, das Löschen von zwischengespeicherten Transaktionsdaten oder das Abbrechen von bereits veranlassten Transaktionen - nicht nur dann ein, wenn die Steuereinrichtung des Datenträgers eine Abweichung der wieder entgegengenommenen von den übergebenen Pseudotransaktionsdaten feststellt, sondern auch dann, wenn der Datenträger an das Endgerät übergebene Pseudotransaktionsdaten nicht innerhalb eines vorgegebenen Zeitintervalls wieder entgegennehmen kann, da in diesem Fall mit einiger Wahrscheinlichkeit von einer Manipulation der Pseudotransaktion durch eine auf dem Endgerät installierte Schadsoftware auszugehen ist, z.B. indem manipulierte Pseudotransaktionsdaten direkt an den Transaktionsserver geschickt wurden. Zusätzlich kann der Datenträger ein entsprechendes Warnsignal an den Transaktionsserver schicken, um ein ungeprüftes Ausführen bereits vorliegender (gefälschter) Realtransaktionsdaten zu verhindern.

Das Endgerät empfängt Benutzereingaben, unter anderem auch die Realtransaktionsdaten, über eine Eingabeeinrichtung. Die Pseudotransaktionsdaten empfängt das Endgerät von dem Datenträger als Eingabeeinheit. Vorzugsweise sollte das Endgerät, bzw. eine darauf laufende Schadsoftware, die Pseudotransaktionsdaten und die Realtransaktionsdaten nicht anhand der Eingabequelle unterscheiden können. Zu diesem Zweck sind verschiedene Zusatzmaßnahmen möglich.

Die Eingabeeinrichtung und der Datenträger als Eingabeeinheit können über den gleichen Datenbus, beispielsweise USB, mit dem Endgerät verbunden sein. Die Eingabeeinheit und der Eingabeeinrichtung sollten auf dem Datenbus nicht vom Vorrichtungstyp unterscheidbare Einheiten sein bzw. als solche behandelt werden. Abgesehen von einer möglicherweise unterschiedlichen Adresse sollten alle für Anwendungen auf dem Endgerät, wie die Schadsoftware, erkennbaren Datenbusparameter identisch sein. Zu diesem Zweck kann der tragbare Datenträger vor der Anmeldung auf dem Datenbus, die Parameter der Eingabeeinrichtung anfragen und sich anschließend als die Eingabeeinheit mit den gleichen Datenbusparametern anmelden. Gegebenenfalls kann der Datenträger das Endgerät auffordern, einen Datenbusparameter der Eingabeeinrichtung zu ändern. Dieser Schritt ist insbesondere sinnvoll, wenn die Eingabeeinrichtung ansonsten als Standardeingabeeinrichtung markiert und somit leicht erkennbar wäre und/oder wenn der Datenträger keine Eingabeeinheit mit den Datenbusparametern der Eingabeeinrichtung simulieren kann.

In einer bevorzugten Ausgestaltung sind der Datenträger als Eingabeeinheit und die Eingabeeinrichtung über eine gemeinsame Datenleitung mit dem Endgerät verbunden. Beide Eingabequellen verwenden dann einen gemeinsamen physischen Datenkanal und vorzugsweise auch den gleichen logischen Datenkanal. Das Endgerät kann somit nicht mehr unterscheiden, von welcher Eingabequelle die Realtransaktionsdaten oder die Pseudotransaktionsdaten stammen.

In einer ersten Variante ist der Datenträger zwischen der Eingabeeinrichtung und dem Endgerät angeordnet. Der Datenträger kann mit zwei entsprechenden Schnittstellen ausgestaltet sein, beispielsweise als USB-Token mit einem USB-Eingang für die Eingabeeinrichtung und zumindest einem USB-Ausgang für das Endgerät. Auf dem Endgerät ist von den beiden möglichen Datenquellen nur der Datenträger als USB-Einheit angemeldet. Die Eingabeeinrichtung ist für das Endgerät nicht als solche erkennbar oder bekannt. (Realtransaktions-)Daten der Eingabeeinrichtung werden, vorzugsweise transparent, an das Endgerät weitergeleitet. Die Pseudotransaktionsdaten werden somit über den gleichen physischen (und logischen) Kanal zum Endgerät übertragen, wie die Realtransaktionsdaten. Der Datenträger kann optional eine eigene Schnittstelle, also einen weiteren physischen Kanal, für die Anmeldung als Transaktionseinheit umfassen. Alternativ kann die Transaktionseinheit jedoch auch über den ersten physischen Kanal, d.h. über die erste Schnittstelle des Datenträgers, mit Hilfe eines zweiten logischen Kanals mit dem Endgerät kommunizieren (2 USB-Subeinheiten an einer USB-Leitung).

In einer zweiten Variante ist die Eingabeeinrichtung zwischen dem Datenträger und dem Endgerät angeordnet. Der Datenträger ist mit der Eingabeeinrichtung verbunden und die Eingabeeinrichtung leitet die Pseudotransaktionsdaten des Datenträgers an das Endgerät weiter. Wiederum ist für eine Schadsoftware auf dem Endgerät nicht erkennbar, von welcher der beiden Eingabequellen die empfangenen Daten stammen. Vorzugsweise sollte auch in dieser Ausgestaltung ein gemeinsamer logischer Kanal für die Pseudotransaktionsdaten und die Realtransaktionsdaten verwendet werden.

Weitere Merkmale und Vorteile der Erfindung ergeben sich aus der folgenden Beschreibung von erfindungsgemäßen Ausführungsbeispielen sowie weiteren Ausführungsalternativen im Zusammenhang mit den Zeichnungen, die zeigen:
- Fig. 1: eine schematische Anordnung aus einem Endgerät, einem erfindungsgemäßen portablen Datenträger und einem Transaktionsserver zur Illustration des erfindungemäßen Prüfverfahrens; und
- Fig. 2: beispielhafte Möglichkeiten, eine Realtransaktion durch eine oder mehrere Pseudotransaktionen abzusichern.

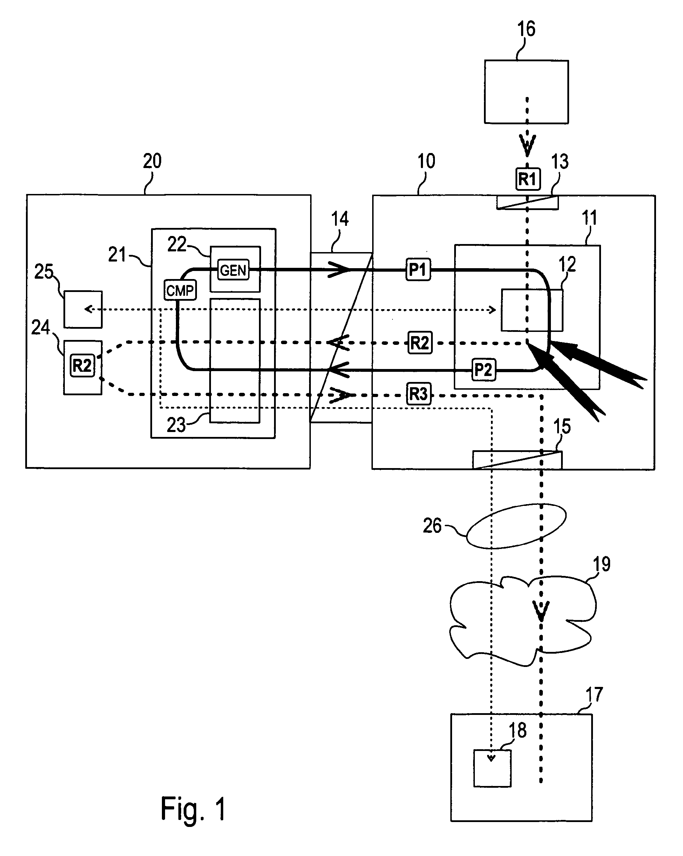

Fig. 1 zeigt ein elektronisches Endgerät 10, z.B. einen Computer, ein Laptop, PDA, Mobilfunkendgerät oder dergleichen, welches eine geeignete Software- und Hardwareausstattung besitzt, um elektronische Transaktionen, beispielsweise in Wechselwirkung mit einem Transaktionsserver 17, auf Veranlassung eines Nutzers des Endgeräts 10 anzuweisen. Derartige Realtransaktionen können beispielsweise Online-Banking-Transaktionen sein, z.B. eine Online-Überweisung von einem Bankkonto des Nutzers auf ein Zielkonto, die über eine von einem Bankserver 17 oder für denselben bereitgestellte und von einem Browser 11 des Endgeräts 10 angezeigte Website bzw. ein entsprechendes Web-Formular 12 von dem Nutzer über das Internet 19 veranlasst werden kann. Eine solche Realtransaktion wird in der Regel von dem Nutzer dadurch veranlasst, dass er Realtransaktionsdaten R1 mittels einer an das Endgerät 10 angeschlossenen Tastatur 16 in das Web-Formular 12 einträgt, die die beabsichtigte Realtransaktion definieren und anschließend an den Transaktionsserver weitergeleitet werden.

Um die einzelnen Datenflüsse unterscheiden zu können, werden in Fig. 1 die Übertragungswege der Realtransaktionsdaten R1, R2, R3 durch eine fett gedruckte strichlinierte Linie, diejenigen der Pseudotransaktionsdaten P1, P2 durch eine fett gedruckte durchgezogene Linie und diejenigen der Website 12 durch eine normal gedruckte strichlinierte Linie dargestellt.

Als Realtransaktionsdaten R1, R2, R3 werden nachfolgend solche Transaktionsdaten bezeichnet, die eine von dem Benutzer des Endgeräts 10 veranlasste und von dem Bankserver 17 ausführbare Transaktion definieren. Im Zusammenhang mit einer Online-Überweisung können Realtransaktionsdaten beispielsweise Authentisierungsdaten des Benutzer, also z.B. ein persönlicher Identifikationscode (PIN), oder Überweisungsdaten, wie z.B. eine Kontonummer und Bankleitzahl des Zielkontos, ein Überweisungsbetrag oder eine Transaktionsnummer (TAN) oder dergleichen sein.

Das Endgerät 10 verfügt insofern über die bekannten Komponenten und Einrichtungen eines Computers, die zur Datenkommunikation mit dem Bankserver 17 und zur Abwicklung derartiger Transaktionen notwendig sind, z.B. Datenkommunikationsschnittstellen 13, 14, 15, eine Eingabeeinrichtung in Form einer Tastatur 16 oder dergleichen, eine Anzeigeeinrichtung in Form eines Monitors oder Bildschirms (nicht dargestellt), ausreichend Speicher sowie einen Prozessor (beides nicht dargestellt), der z.B. Applikationen und Betriebssoftware, insbesondere eine Browserapplikation, ausführen kann, um über den Browser 11 eine Eingabemaske in Form eines Web-Formulars 12 auf dem Monitor anzuzeigen, in das der Nutzer die gewünschten Realtransaktionsdaten R1 eintragen kann.

Der an dem Endgerät 10 angeschlossene portable Datenträger 20 ist vorzugsweise ein USB-Speichertoken, eine USB-Smart-Card, eine Internet Smart Card mit USB-Schnittstelle oder dergleichen, die über die USB-Schnittstelle 14 mit dem Endgerät 10 verbunden ist und einen Prozessor (nicht dargestellt) und Speicher zur Ausführung von Applikationen umfasst, beispielsweise eines Webservers 25 sowie der Steuerapplikation 21, die zur sicheren Übertragung von in das Web-Formular 12 eingegebenen Realtransaktionsdaten R1 eine gesicherte Datenkommunikationsverbindung (symbolisiert durch die Ellipse 26) von dem Endgerät 10 bzw. dem Browser 11 ins Internet 19 und weiter zu dem Bankserver 17 bereitstellt, z.B. durch eine Datenverschlüsselung über SSL/TLS oder ein sonstiges geeignetes Sicherheitskommunikationsprotokoll. Ebenso wird eine von dem Webserver 18 des Bankservers 17 bereitgestellte und von dem Browser 11 wiedergegebene Website 12 über die gesicherte Datenkommunikationsverbindung 26 und die USB-Schnittstelle 14 zur Anzeige durch den Browser 11 an das Endgerät 10 weitergegeben. Alternativ wird die Webseite als Eingabeformular, beispielsweise für den Bankenserver 17, auf dem Datenträger 20 bereitgestellt.

Die von dem Benutzer eingegebenen Realtransaktionsdaten R1 werden also von dem Endgerät 10 oder einer zuständigen Steuer- oder Transaktionsapplikation des Endgeräts 10 (nicht dargestellt) nicht direkt über das Internet 19 an den Bankserver 17 gesendet, sondern mit ihrer Eingabe in das von dem Bankserver 17 bereitgestellte Web-Formular 12 zunächst als Realtransaktionsdaten R2 von dem Datenträger 20 entgegengenommen und dann über die abgesicherte Datenkommunikationsverbindung 26 als Realtransaktionsdaten R3 an den Bankserver 17 übertragen. Hierbei werden die Realtransaktionsdaten R2 gegebenenfalls in einem Speicher 24 des Datenträgers 20 zwischengespeichert.

Die für die oben erläuterte Durchführung einer Realtransaktion benötigten Funktionalitäten des Datenträgers 20, also in erster Linie das Bereitstellen der abgesicherten Datenkommunikationsverbindung 26 sowie das Weiterleiten der Realtransaktionsdaten R2 von dem Browser 11 an den Bankserver 17, wird von einer Steuereinrichtung 21 des Datenträgers 20 bereitgestellt. Vor einer Realtransaktion meldet sich die Steuereinrichtung 21 als Transaktionseinheit 23 gegenüber dem Endgerät 10 an und stellt damit die genannten Funktionalitäten bereit. Die Transaktionseinheit 23 kann hierbei z.B. von einem separaten Softwaremodul innerhalb der Steuereinrichtung 21 gebildet werden.

Der portable Datenträger 20 umfasst vorzugsweise einen eigenen Webserver 25, um seinerseits Webseiten und Inhalte für Dritte im Internet 19 bereitstellen zu können. Darüber hinaus kann der Webserver 25 des portablen Datenträgers 20 auch diejenige Webseite 12 bzw. dasjenige Web-Formular bereitstellen, in das der Benutzer Realtransaktionsdaten R1 zur Definition einer von dem Bankserver 17 auszuführenden Realtransaktion eingeben kann. In diesem Fall liegt also das Web-Formular 12 für ein Online-Banking im Webserver 25 des portablen Datenträgers 20 vor und ist z.B. speziell an den Datenträger 20 angepasst und von der kontoführenden Bank autorisiert.

Bei den genannten Übertragungsschritten der Realtransaktionsdaten R1, R2, R3 ist zunächst lediglich die Übertragung von der Transaktionseinheit 23 des portablen Datenträgers 20 über die abgesicherte Datenkommunikationsverbindung 26 an den Bankserver 17 hinreichend gegen eine Manipulation der Realtransaktionsdaten R3 gesichert, während die Übertragung der Realtransaktionsdaten R1, R2 von der Tastatur 16 an den Browser 11 und von dort weiter an die Transaktionseinheit 23 ungesichert ist und z.B. Gegenstand einer Datenmanipulation durch eine auf dem Endgerät 10 installierte Schadsoftware sein kann (symbolisiert durch die beiden Pfeilmarkierungen). Ein besonderes Sicherheitsrisiko stellen in diesem Zusammenhang öffentliche Computer dar, z.B. in einem Internet-Cafe oder dergleichen, die leichte Angriffsflächen für eine (elektronische) Infizierung mit einer Schadsoftware bieten, z.B. durch einen Trojaner oder einen Virus.

Ziel einer solchen Datenmanipulation kann beispielsweise die Fälschung der Realtransaktionsdaten R1 bzw. der angegebenen Authentisierungs-, Konto- und Bankdaten dahingehend sein, dass sie eine andere, gefälschte Transaktion definieren, z.B. eine gefälschte Geldüberweisung zu Gunsten eines Dritten, z.B. des Entwicklers der Schadsoftware. Zumeist finden solche Datenmanipulationen auf dem Weg der Realtransaktionsdaten R2 zum Datenträger 20 zwischen dem Browser 11 und der Schnittstelle 14 statt, so dass sich die in das Web-Formular 12 eingegebenen Realtransaktionsdaten R1 und die an der Schnittstelle 14 übergebenen Realtransaktionsdaten R2 signifikant voneinander unterscheiden. Diesen Umstand macht man sich zum Prüfen der Manipulationssicherheit des Endgeräts 10 durch eine oder mehrere Pseudotransaktionen insofern zunutze, als dass eine Datenmanipulation und somit eine Schadsoftware auf dem Endgerät 10 immer dann vorliegt, wenn in das Web-Formular 12 eingegebene Pseudotransaktionsdaten P1 von Pseudotransaktionsdaten P2, die der Transaktionseinheit 23 über die Schnittstelle 14 übergeben werden, signifikant abweichen, d.h. Abweichungen in den für die Transaktion wesentlichen Daten vorliegen, wie z.B. bei den Konto- und Bankdaten, dem Überweisungsbetrag oder dergleichen.

Zu diesem Zweck umfasst die Steuereinrichtung 21 neben der Transaktionseinheit 23 bzw. neben einem Mechanismus, mit dem die Steuereinrichtung 21 den Datenträger 20 gegenüber dem Endgerät 10 als Transaktionseinheit 23 anmelden kann, auch eine Eingabeeinheit 22 bzw. einen Mechanismus, mit dem die Steuereinrichtung 21 den Datenträger 20 gegenüber dem Endgerät 10 als Eingabeeinheit 23 anmelden kann, z.B. als Tastatur, Maus oder dergleichen. Der Datenträger kann sich also über die USB-Schnittstelle 14 gegenüber dem Endgerät 10 - völlig transparent für das Endgerät 10 und insbesondere für eine dort installierte Schadsoftware - gleichzeitig als Transaktionseinheit 22 und als Eingabeeinheit 22 anmelden und auf diese Weise eine Pseudotransaktion durchführen, bei der Pseudotransaktionsdaten P1 von der Eingabeeinheit 22 an den Browser 11 bzw. das Web-Formular 12 übergeben und entsprechende Pseudotransaktionsdaten P2 wieder über die USB-Schnittstelle 14 entgegengenommen werden. Sofern dann eine Manipulation der Pseudotransaktionsdaten P2 durch eine Schadsoftware stattfindet, kann die Steuereinrichtung 21 diese durch einen Vergleich (CMP) der Pseudotransaktionsdaten P1 mit den Pseudotransaktionsdaten P2 feststellen.

Hierbei werden die von der Transaktionseinheit 23 entgegengenommenen Pseudotransaktionsdaten P2 nicht, wie üblich, über die abgesicherte Datenkommunikationsverbindung 26 an den Bankserver 17 weitergeleitet, da die Pseudotransaktionsdaten P1, P2 keine von dem Benutzer des Endgeräts 10 veranlasste und von dem Bankserver 17 ausführbare Realtransaktion definieren, sondern eine solche Realtransaktion lediglich für die Prüfung auf Vorliegen eine Schadsoftware transparent simulieren.

Sofern bei einer Pseudotransaktion die übergebenen und wieder entgegengenommenen Pseudotransaktionsdaten P1 und P2 im Wesentlichen übereinstimmen, ist die Wahrscheinlichkeit hoch, dass auf dem Endgerät 10 keine Schadsoftware installiert ist und eine Realtransaktion ungefährdet durchgeführt werden kann.

Die Übergabe der Pseudotransaktionsdaten P1 durch die Eingabeeinheit 22 an den Browser 11 bzw. das Web-Formular 12, mit dem eine Online-Banking Transaktion gegenüber dem Bankserver 17 angewiesen wird, ist abhängig von der Gestaltung des Web-Formulars 12, denn außer den reinen Nutzdaten, wie. z.B. Authentifizierung-, Konto- und Bankdaten, müssen die Pseudotransaktionsdaten P1 auch Steuerdaten umfassen, die die Position im Web-Formular 12 angeben, an der die Nutzdaten jeweils einzutragen sind. Insofern kann das Web-Formular 12 an die maschinelle Eingabe von (Pseudo-) Transaktionsdaten durch die Eingabeeinheit 22 des Datenträgers 20 angepasst werden, z.B. indem Steuerkommandos und Steuerzeichen bereitstellt werden, mit denen die einzelnen Eingabefelder für die Eingabe der Nutzdaten angesteuert werden können. Hierfür kann z.B. ein für Pseudotransaktionen geeignetes Web-Formular 12 auf dem Webserver 25 des Datenträgers 20 hinterlegt wird, das immer dann verwendet wird, wenn der Datenträger 20 mit dem Endgerät 10 verbunden ist.

Es ist prinzipiell zu unterscheiden zwischen einer Pseudotransaktion, die durchgeführt wird, während gerade keine Realtransaktionsdaten von dem Benutzer des Endgeräts 10 in das Web-Formular 12 eingegeben werden und einer Pseudotransaktion, die parallel zu einer Realtransaktion ausgeführt wird, und bei der insofern in das entsprechenden Web-Formular 12 sowohl Realtransaktionsdaten R1 als auch Pseudotransaktionsdaten P1 eingetragen werden.

Im erstgenannten Fall muss das Web-Formular 12 ein Positionsrücksetzungssteuerkommando interpretieren können, damit eine Eingabeaufforderung ("Cursor") des Web-Formulars 12 nach der Eingabe der Pseudotransaktionsdaten P1 wieder auf dessen erstes Eingabefeld zurückgesetzt werden kann. Die Eingabeeinheit 22 kann dann Pseudotransaktionsdaten P1 vorbereiten (GEN), die mittels Tabulator- und Positionsrücksetzungssteuerzeichen durch das Web-Formular 12 navigieren. Ebenso können Steuerzeichen bereitgestellt werden, die ein direktes Ansteuern bestimmter Eingabefelder zulassen.

Im letztgenannten Fall, also bei der (quasi) gleichzeitigen Eingabe von Realtransaktionsdaten R1 und Pseudotransaktionsdaten P1 in das Web-Formular 12, ist die Position des Cursors für die Eingabe der Pseudotransaktionsdaten P1 unbekannt (da sie von der manuellen Eingabe der Realtransaktionsdaten durch den Benutzer abhängt) und kann durch diese auch nicht verändert werden. Auch hierzu gibt es vielfältige Möglichkeiten. Einerseits kann das Web-Formular 12 ein verstecktes Eingabefeld umfassen, das für den Benutzer nicht sichtbar und auch nicht adressierbar ist und von der Eingabeeinheit 22 des Datenträgers 20 für den Benutzer nicht sichtbar ausgefüllt wird. Dieses versteckte Eingabefeld kann nur durch ein Steuerkommando angewählt werden und kann somit nicht versehentlich manuell ausgefüllt werden. Ebenso können auch Realtransaktionsdaten aus einem bereits ausgefüllten Eingabefeld in ein nicht sichtbares Eingabefeld als Pseudotransaktionsdaten unverändert oder durch eine vorgegebene Transformation verändert übernommen werden.

Alternativ zu der Verwendung verborgener Eingabefelder können Pseudotransaktionsdaten auch in den manuell ausfüllbaren Eingabefeldern des Web-Formulars 12 versteckt werden, z.B. indem Pseudotransaktionsdaten durch ein Steuerkommando ("Tag") eingeleitet werden. Derartige Pseudotransaktionsdaten können dann durch eine TLV-Datenformat ("Tag/Type-Length-Value") strukturiert werden. Ebenso ist es möglich, eines oder mehrer Zeichen, die einem Sonderzeichen (z.B. Klammern oder dergleichen) in einem Eingabefeld folgen, zu verbergen und als Pseudotransaktionsdaten auszuwerten.

In jedem Falle wird das mit Real- und Pseudotransaktionsdaten ausgefüllte Web-Formular 12 von der Transaktionseinheit 23 dahingehend überprüft, ob die nicht dargestellten Pseudotransaktionsdaten vorhanden sind und ob sie gegenüber den vorgegebenen Pseudotransaktionsdaten unverändert von der Transaktionseinheit 23 entgegengenommen wurden.

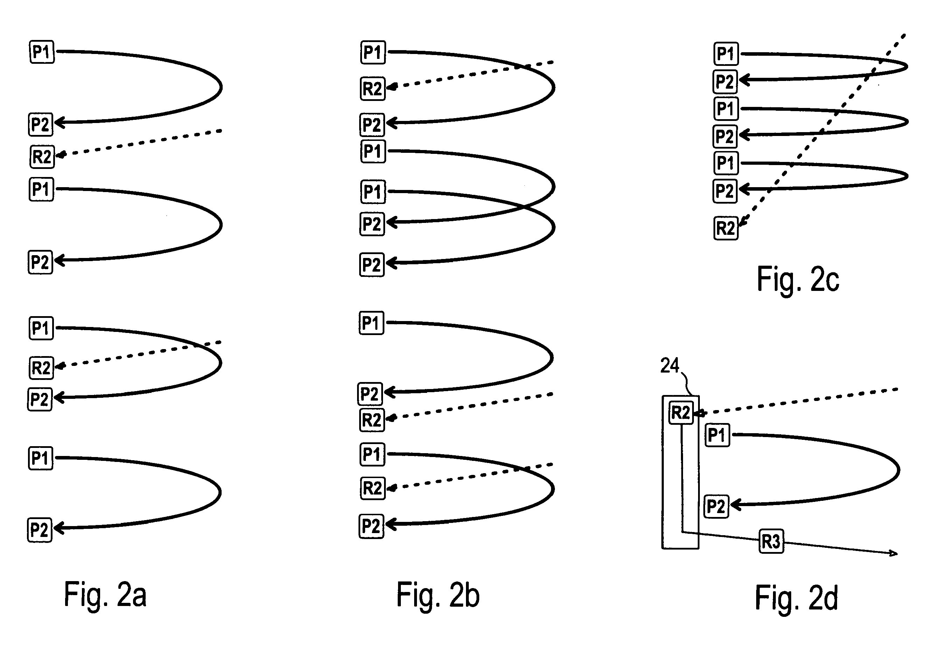

Prinzipiell gibt es eine Vielzahl von Möglichkeiten, Pseudotransaktionen zeitlich mit Realtransaktionen so zu verzahnen, dass möglichst zuverlässig festgestellt werden kann, ob eine bestimmte Realtransaktion manipulationssicher durchführbar ist oder nicht. Einige bevorzugte Varianten sind in Fig. 2 illustriert, in deren Zusammenhang unter der Ausführung einer Pseudotransaktion oder einer Realtransaktion derjenige Transaktionsdatenverkehr P1, P2; R2 zu verstehen ist, der über die USB-Schnittstelle 14 zwischen dem Endgerät 10 und den Datenträger 20 läuft.

Zunächst ist es möglich, dass die Steuereinrichtung 21 während des Betriebs des Datenträgers 20 regelmäßig fortlaufend Pseudotransaktionen durchführt, sobald der Datenträger 20 an das Endgerät 10 angeschlossen wird (Fig. 1a), um eine möglichst lückenlose Manipulationsprüfung zu erreichen. Die Realtransaktionen werden in der Weise, wie sie von dem Benutzer veranlasst werden, intermittierend oder sequentiell zu den Pseudotransaktionen durchgeführt. Die konkreten Zeitpunkte der regelmäßigen Pseudotransaktionen können dabei konstant vorgegeben oder zufällig bestimmt werden (Fig. 2b) oder anhand von Betriebsparametern festgelegt werden, z.B. anhand des tatsächlichen Aufkommens an Realtransaktionen. Dadurch können auszuführende Realtransaktionen geschützt werden, indem sie durch eine nahezu beliebig festlegbare Anzahl von Pseudotransaktionen maskiert werden.

Darüber hinaus ist es möglich, dass eine oder mehrere Pseudotransaktionen parallel mit einer auszuführenden Realtransaktion durchgeführt werden (Fig. 2c), so dass während einer Realtransaktion zumindest eine Pseudotransaktion durchgeführt wird. Die betreffende Realtransaktion wird dann abgebrochen, wenn anhand zumindest einer parallel ausgeführten Pseudotransaktion eine Datenmanipulation festgestellt wurde.

Darüber hinaus ist es auch möglich, eine Pseudotransaktion immer unmittelbar vor einer Realtransaktion durchzuführen und dazu die Realtransaktion gegebenenfalls solange zu verzögern, bis das Ergebnis der Pseudotransaktion vorliegt. Sobald sich in dem Fällen der Fig. 2a bis 2c eine Pseudotransaktion als manipuliert herausstellt, wird die entsprechende Realtransaktion von der Steuereinrichtung 21 sofort abgebrochen.

Ebenso können die im Rahmen einer Realtransaktion an den Datenträger 20 übergebenen Realtransaktionsdaten R2 auch in einem Speicher 24 des Datenträgers 20 zwischengespeichert werden und erst dann zu Ausführung weitergeleitet werden, wenn eine nach der Zwischenspeicherung veranlasste Pseudotransaktion erfolgreich abgeschlossen wurde (Fig. 2d). Anderenfalls wird auch hier die Realtransaktion abgebrochen, z.B. indem die zwischengespeicherten Realtransaktionsdaten R2 von der Steuereinrichtung 21 gelöscht werden.

Hierbei ist es insbesondere vorgesehen, dass die Pseudotransaktionsdaten P1 von der Steuereinrichtung 21 derart erzeugt werden, dass anhand der gegebenenfalls manipulierten Pseudotransaktionsdaten P2 festgestellt werden kann, welche Schadsoftware oder welcher Typ von Schadsoftware die Manipulation durchgeführt hat. Die Pseudotransaktionsdaten P1 werden also so ausgewählt, dass in manipulierten Pseudotransaktionsdaten P2 eine Signatur oder eine sonstige identifizierbare und zuordenbare Datenmanipulation der Schadsoftware enthalten ist.

Vorzugsweise werden die von der Steuereinrichtung 21 entgegengenommenen Realtransaktionsdaten R2 in einem Speicher 24 des Datenträgers 20 zwischengespeichert und erst dann als Realtransaktionsdaten R3 an den Bankserver 17 zu Ausführung der Transaktion übertragen, wenn aufgrund von durchgeführten Pseudotransaktionen erwiesen ist, dass die Realtransaktionsdaten R2 nicht manipuliert wurden und genau diejenige Realtransaktion definieren, die der Benutzer des Endgeräts 10 durch Eingabe der Realtransaktionsdaten R1 in das Web-Formular 12 veranlasst hat. Deshalb ist es auch möglich, Pseudotransaktionen erst nach einer Realtransaktion durchzuführen und dadurch die Manipulationssicherheit des Endgeräts 10 erst (nachträglich) zu einem Zeitpunkt zu prüfen, zu dem die Realtransaktionsdaten R2 nicht mehr der Kontrolle des Endgeräts 10 unterstehen, sondern bereits auf dem Datenträger 20 zwischengespeichert sind.

Analog ist es möglich, dass zusätzlich oder alternativ auch der Bankserver 17 einen Zwischenspeicher (nicht dargestellt) umfasst, und von der Steuereinrichtung 21 an den Bankserver 17 übertragene und dort zwischengespeicherte Realtransaktionsdaten R3 erst dann ausgeführt werden, wenn die Steuereinrichtung 21 die Manipulationssicherheit des Endgeräts 10 festgestellt hat und ein entsprechendes Freigabesignal an den Bankserver 17 überträgt. Umgekehrt ist es sowohl im Falle von im Speicher 24 zwischengespeicherten Realtransaktionsdaten R2 als auch im Falle von auf dem Bankserver 17 zwischengespeicherten Realtransaktionsdaten R3 möglich, dass ein Warteintervall vereinbart wird, nach dessen Ablauf die Realtransaktionsdaten R2, R3 weitergeleitet bzw. ausgeführt werden. Die Ausführung der betreffenden Realtransaktion kann also noch innerhalb des Warteintervalls von der Steuereinrichtung 21 abgebrochen werden, falls durch eine Pseudotransaktion eine Schadsoftware auf dem Endgerät 10 festgestellt wird.

Neben der reinen Manipulation von Realtransaktionsdaten R1 kann eine Schadsoftware auch den üblichen Übertragungsweg von Transaktionsdaten R1 über die Schnittstelle 14, den Datenträger 20 (bzw. die Transaktionseinheit 23) und die abgesicherte Datenkommunikationsverbindung 26 (über die Schnittstellen 14 und 15) an den Bankserver 17 ändern und (geänderte) Realtransaktionsdaten R2 unter Umgehung des Datenträgers 20 über die Schnittstelle 15 und das Internet 19 direkt an den Bankserver 17 weiterleiten - und dadurch die Ausführung der Realtransaktion der Kontrolle der Steuereinrichtung 21 des Datenträgers 20 entziehen. Um zu verhindern, dass solche direkt an den Bankserver 17 übertragenen, manipulierten Realtransaktionsdaten R2 von dem Bankserver 17 ohne weiteres und zum Schaden des rechtmäßigen Kontoinhabers ausgeführt werden, kann die Steuereinrichtung 21 die von der Eingabeeinheit an den Browser 11 zu übergebenden Pseudotransaktionsdaten P1 derart erzeugen, dass der Bankserver 17 anhand der (gegebenenfalls von der Schadsoftware veränderten) Pseudotransaktionsdaten P2 einerseits erkennen kann, dass es sich um Pseudotransaktionsdaten P2 und nicht um ausführbare Realtransaktionsdaten R2 handelt - und das selbst dann, wenn die Pseudotransaktionsdaten P2 derart von der Schadsoftware geändert wurden, dass sie eine prinzipiell ausführbare, aber von dem betreffenden Kontoinhaber nicht veranlasste Transaktion definieren. Derartige Transaktionen, deren Transaktionsdaten P2, R2 möglicherweise vorher bereits in einem Zwischenspeicher des Bankservers 17 abgelegt wurden, werden dann von dem Bankserver 17 abgebrochen.

## Patentansprüche

1. Verfahren auf einem portablen Datenträger (20) zum Prüfen einer Manipulationssicherheit eines Endgeräts (10), mit dem der Datenträger (20) als eine Transaktionseinheit (23) verbunden ist, **dadurch gekennzeichnet, dass** der Datenträger (20) mit dem Endgerät (10) zusätzlich als Eingabeeinheit (22) verbunden ist und prüft, ob als Transaktionseinheit (23) von dem Endgerät (10) entgegengenommene Pseudotransaktionsdaten (P2) im Vergleich zu dem Endgerät (10) als Eingabeeinheit (22) übergebenen Pseudotransaktionsdaten (P1) unmanipuliert sind.

2. Verfahren nach Anspruch 1, **dadurch gekennzeichnet, dass** die Manipulationssicherheit des Endgeräts (10) mittels einer Pseudotransaktion geprüft wird, indem der Datenträger (20)
- als Eingabeeinheit (22) Pseudotransaktionsdaten (P1) erzeugt und an das Endgerät (10) übergibt.

3. Verfahren nach Anspruch 1 oder 2, **dadurch gekennzeichnet, dass** der Datenträger (20)
- als Transaktionseinheit (23) Pseudotransaktionsdaten (P2) von dem Endgerät (10) entgegennimmt; und
- die Manipulationssicherheit des Endgeräts (10) feststellt, falls die übergebenen und die entgegengenommenen Pseudotransaktionsdaten (P1, P2) im Wesentlichen übereinstimmen.

4. Verfahren nach Anspruch 2 oder 3, **dadurch gekennzeichnet, dass** der Datenträger (20) als Eingabeeinheit (22) die Pseudotransaktionsdaten (P1) derart erzeugt und/oder übergibt, dass sie von realen Transaktionsdaten (R1, R2, R3) unterscheidbar sind.

5. Verfahren nach einem der Ansprüche 1 bis 4, **dadurch gekennzeichnet, dass** der Datenträger (20) als Eingabeeinheit (22) die Pseudotransaktionsdaten (P1) vor und/oder nach einer realen Transaktion übergibt.

6. Verfahren nach einem der Ansprüche 1 bis 5, **dadurch gekennzeichnet, dass** der Datenträger (20) als Eingabeeinheit (22) die Pseudotransaktionsdaten (P1) übergibt, während ein Benutzer in dem Endgerät reale Transaktionsdaten eingibt.

7. Verfahren nach einem der Ansprüche 1 bis 6, **dadurch gekennzeichnet, dass** der Datenträger (20) ein Eingabeformular zur Eingabe von Transaktionsdaten durch einen Benutzer bereitstellt.

8. Verfahren nach Anspruch 7, **dadurch gekennzeichnet, dass** das Eingabeformular angepasst ist, für eine automatisierte Eingabe der Pseudotransaktionsdaten (P1) durch den Datenträger (20) als Eingabeeinheit (22).

9. Verfahren nach Anspruch 7 oder 8, **dadurch gekennzeichnet, dass** das Eingabeformular Mittel zur automatischen Auswahl zumindest eines Formularfeldes des Eingabeformulars aufweist, wobei vorzugsweise Formularfelder dediziert auswählbar sind oder ein Startformularfeld des Eingabeformulars auswählbar ist und des weiteren Mittel zur Navigation zwischen ausgewählten Formularfeldern vorgesehen sind.

10. Verfahren nach einem der Ansprüche 7 bis 9, **dadurch gekennzeichnet, dass** das Eingabeformular angepasst ist, eingegebene Pseudotransaktionsdaten (P1) dem Benutzer nicht darzustellen.

11. Verfahren nach einem der Ansprüche 7 bis 10, **dadurch gekennzeichnet, dass** das Eingabeformular angepasst ist, eingegebene Pseudotransaktionsdaten (P1) in einem separaten, nicht sichtbaren Formularfeld, das vorzugsweise durch den Benutzer nicht manuell auswählbar ist, oder als nicht sichtbaren Inhalt in einem sichtbaren Formularfeld vor dem Benutzer zu verbergen.

12. Verfahren nach einem der Ansprüche 1 bis 11, **dadurch gekennzeichnet, dass** der Datenträger (20) dem Endgerät (10) eine sichere Datenkommunikationsverbindung (26) zu einem externen Transaktionsserver (17) und /oder abgesicherte Realtransaktionsdaten für einen externen Transaktionsserver (17) bereitstellt.

13. Portabler Datenträger (20), umfassend zumindest einen Speicher (24), einen Prozessor, eine Datenkommunikationsschnittstelle (14) zum Verbinden mit einem Endgerät (10) sowie eine Steuereinrichtung (21), die eingerichtet ist, den Datenträger (20) als Transaktionseinheit (23) gegenüber einem mit dem Datenträger (20) verbundenen Endgerät (10) anzumelden, **dadurch gekennzeichnet, dass** die Steuereinrichtung (21) weiterhin eingerichtet ist, den Datenträger (20) gleichzeitig gegenüber dem Endgerät (10) als Eingabeeinheit (22) anzumelden und Pseudotransaktionsdaten (P1) über die Datenkommunikationsschnittstelle (14) an das Endgerät (10) zu übergeben sowie als Transaktionseinheit (23) Pseudotransaktionsdaten (P2) über die Datenkommunikationsschnittstelle (14) von dem Endgerät (10) entgegenzunehmen und zu prüfen, ob die entgegengenommenen Pseudotransaktionsdaten (P2) im Vergleich zu den übergebenen Pseudotransaktionsdaten (P1) unmanipuliert sind.

14. Datenträger nach Anspruch 13, **dadurch gekennzeichnet, dass** der Datenträger (20) als Datenkommunikationsschnittstelle (14) eine USB-Schnittstelle umfasst und die Steuereinrichtung (21) eingerichtet ist, ein Verfahren nach einem der Ansprüche 1 bis 12 durchzuführen.

15. System aus zumindest einem Datenträger nach Anspruch 13 oder 14, einem Endgerät (10), wobei Benutzereingaben am Endgerät durch Pseudotransaktionen gemäß einem der Verfahren nach Anspruch 2 bis 12 auf eine mögliche Manipulation geprüft werden.
